# EUROPÄISCHE PATENTSCHRIFT

(11) **EP 2 913 138 B1**
(45) Veröffentlichungstag und Bekanntmachung des Hinweises auf die Patenterteilung: **29.03.2017**
(21) Anmeldenummer: 14157181.0
(22) Anmeldetag: 28.02.2014
(51) Int. Cl.: B23K 26/24, B21D 39/03, B23K 33/00, F16B 5/07, F16B 5/08, F16B 17/00

(54) **Fertigungsverfahren sowie Verfahren zur Herstellung eines Trägers zur Führung einer Bewegungseinheit einer Werkzeugmaschine**
Method of producing and method of manufacturing a support for guiding a motion unit of a machine tool
Procédé de fabrication et procédé de construction d'un support pour le guidage d'une unité mobile d'une machine-outil

(43) Veröffentlichungstag der Anmeldung: 02.09.2015
(73) Patentinhaber: TRUMPF Werkzeugmaschinen GmbH + Co. KG, 71254 Ditzingen (DE); Trumpf Sachsen GmbH, 01904 Neukirch (DE)
(72) Erfinder: Harnisch, Gunter, 01936 Königsbrück (DE); Knobel, Carsten, 02689 Sohland (DE); Herbst, Jörg, 71254 Ditzingen (DE); Wunderlich, Tom, 71297 Mönsheim (DE); Langer, Guido, 71287 Weissach (DE); Wagner, Kim Martin, 71665 Vaihingen/Enz (DE); Förster, Stefan, 02681 Kirschau (DE)
(74) Vertreter: Kohler Schmid Möbus Patentanwälte

(56) Entgegenhaltungen:
- DE-A1- 3 733 568
- DE-A1-102008 013 203
- DE-U1- 7 610 361
- GB-A- 191 215 005
- JP-A- H1 147 925
- JP-U- S61 149 390
- US-A- 6 135 666

## Beschreibung

Die Erfindung betrifft ein Fertigungsverfahren, im Rahmen dessen zwei Werkstücke, vorzugsweise zwei Bleche, an beiderseitigen Verbindungszonen mit gegenseitiger Überlappung angeordnet und im Überlappungsbereich mit einander zugewandten Kontaktseiten der Verbindungszonen aneinander angelegt werden und im Rahmen dessen die aneinander angelegten Werkstücke durch Laserschweißen miteinander verbunden werden.

Die Erfindung betrifft außerdem ein Verfahren zur Herstellung eines Trägers zur Führung einer Bewegungseinheit einer Werkzeugmaschine, wobei der Träger unter Anwendung des vorstehenden Fertigungsverfahrens als Schweißkonstruktion mit einem aus Blechen gefertigten äußeren Träger-Hohlprofil hergestellt wird, siehe auch Anspruch 8.

Beim Laserschweißen werden Werkstücke mittels fokussierter Laserstrahlung und dabei in aller Regel ohne Zufuhr eines Zusatzwerkstoffes miteinander verbunden. Sind zwei übereinanderliegende Werkstücke, beispielsweise zwei übereinanderliegende Bleche, durch Laserschweißen miteinander zu verbinden, so wird die fokussierte Laserstrahlung auf die Oberfläche eines der beiden Werkstücke gerichtet. Aufgrund des Wärmeeintrags wird nicht nur der Werkstoff des der Quelle der Laserstrahlung zugewandten Werkstücks sondern auch der Werkstoff des darunter liegenden Werkstücks geschmolzen. Beim Abkühlen der Schmelze wird zwischen den beiden Werkstücken eine Schweißverbindung hergestellt.

Aufgrund der Wirkungsweise des Laserschweißens ergibt sich zwischen zwei übereinanderliegenden Werkstücken eine belastbare Schweißverbindung durch Laserschweißen nur unter der Voraussetzung, dass die beiden Werkstücke während des Schweißvorgangs einander eng benachbart sind. Im Idealfall liegen die beiden Werkstücke in demjenigen Bereich, in welchem die Schweißverbindung hergestellt werden soll, unmittelbar aneinander an.

Dies ist aus dem gattungsbildenden Dokument DE 37 33 568 A1 bekannt. Im Rahmen eines in dieser Druckschrift offenbarten Fertigungsverfahrens werden einander überdeckende Blechteile vor dem Laserschweißen gegeneinander gedrückt. Die Mittel, mit denen dies bewerkstelligt wird, sind in DE 37 33 568 A1 nicht beschrieben.

Weiterer Stand der Technik ist offenbart in JP H11 47925A, DE 76 10 361 U1, GB 15,005 A und US 6,135,666 A.

JP H11 47925 A offenbart ein Verfahren, im Rahmen dessen zwei aufeinander liegende Platten durch Lichtbogenschweißen mit einer nichtabschmelzenden Elektrode miteinander verbunden werden. Die beiden miteinander zu verbindenden Platten müssen beim Schweißen aufeinander liegen.

DE 76 10 361 U1 betrifft ein Gerät mit mehreren durch gegenseitige Verlappung miteinander verbundenen Blechteilen. Zur Herstellung der Verbindung wird durch eine Öffnung eines ersten Blechteils ein Lappen hindurchgesteckt, der an einer Stirnseite eines senkrecht zu dem ersten Blechteil ausgerichteten zweiten Blechteils vorsteht. Anschließend wird der Lappen um einen senkrecht zu dem ersten Blechteil verlaufenden Mittelsteg gedreht und dadurch in eine Stellung überführt, in der er den Rand der Öffnung an dem ersten Blechteil übergreift und in der er die beiden Blechteile aneinander festlegt.

Aus GB 15,005 A ist ein Verfahren zur Herstellung einer formschlüssigen Verbindung zwischen zwei Metallteilen bekannt. Ein Befestigungsplättchen wird dabei durch miteinander fluchtende Öffnungen zweier aufeinanderliegender Metallteile hindurchgesteckt und anschließend derart tordiert, dass das Befestigungsplättchen die Öffnungen der Metallteile mit einem Mittelteil durchsetzt und mit zwei im Wesentlichen senkrecht zueinander verlaufenden Kopfteilen die Ränder der Öffnungen beidseits der aufeinanderliegenden Metallteile übergreift.

US 6,135,666 A offenbart ein Verfahren zum Verbinden eines ersten plattenartigen Bauteils mit einem zweiten plattenartigen Bauteil, das senkrecht zu dem ersten plattenartigen Bauteil ausgerichtet ist und an welchem das erste plattenartige Bauteil mit einer randseitigen Stirnfläche anliegt. Mittels einer Verriegelungsvorrichtung werden die beiden Bauteile relativ zueinander justiert, ehe zwischen den beiden Bauteilen eine Schweißverbindung hergestellt wird. Die Verriegelungsvorrichtung umfasst einen drehbaren Vorsprung an der randseitigen Stirnfläche des ersten Bauteils. Im Ausgangszustand fluchtet der drehbare Vorsprung mit dem restlichen ersten Bauteil. Zur gegenseitigen Justage der beiden Bauteile wird zunächst der im Ausgangszustand befindliche drehbare Vorsprung des ersten Bauteils durch eine Öffnung des zweiten Bauteils hindurchgesteckt. Anschließend wird der drehbare Vorsprung um einen im Innern der Öffnung des zweiten Bauteils angeordneten querschnittsreduzierten Teil gedreht, bis ein Kopfteil des drehbaren Vorsprungs den Rand der Öffnung des zweiten Bauteils an der von dem ersten Bauteil abliegenden Seite übergreift. Zu guter Letzt werden die beiden Bauteile längs des mit der Stirnfläche versehenen Randes des ersten Bauteils miteinander verschweißt.

Die Aufgabe der vorliegenden Erfindung besteht ausgehend von dem gattungsgemäßen Stand der Technik darin, ein Fertigungsverfahren bereitzustellen, im Rahmen dessen mit möglichst einfachen Mitteln durch Laserschweißen eine belastbare Schweißverbindung zwischen einander überlappenden Werkstücken und einem weiteren Werkstück hergestellt werden kann.

Erfindungsgemäß gelöst wird diese Aufgabe durch das Fertigungsverfahren nach Patentanspruch 1. Gemäß Patentanspruch 8 wird das erfindungsgemäße Fertigungsverfahren im Rahmen eines Verfahrens zur Herstellung eines Trägers zur Führung einer Bewegungseinheit einer Werkzeugmaschine angewandt. Diese Anwendung des erfindungsgemäßen Fertigungsverfahrens ist insbesondere insofern vorteilhaft, als Werkstücke durch Laserschweißen mit einem allenfalls geringen thermischen Verzug miteinander verbunden werden können. Dementsprechend gestattet es das erfindungsgemäße Fertigungsverfahren einen Träger zur Führung einer Bewegungseinheit einer Werkzeugmaschine mit der für diese Anwendung erforderlichen Geradheit herzustellen.

Erfindungsgemäß werden die beiden miteinander zu verbindenden und zuvor mit gegenseitiger Überlappung angeordneten Werkstücke mittels einer Verbindungshilfe aneinander angelegt, die von einem mit den beiden einander überlappenden Werkstücken zu verbindenden weiteren Werkstück gebildet wird, wobei das weitere Werkstück in einander überdeckende Durchtrittsöffnungen der einander überlappenden Werkstücke längs einer Durchtrittsachse derart eingeführt wird, dass ein Widerlager des weiteren Werkstücks an der einen Seite und ein Gegenhalter des weiteren Werkstücks an der gegenüberliegenden Seite des Werkstückpakets der einander überlappenden Werkstücke zu liegen kommt. Während das Widerlager des weiteren Werkstücks bereits die Durchtrittsöffnung des ihm zugeordneten Werkstücks der einander überlappenden Werkstücke in radialer Richtung überragt, liegt der Gegenhalter des weiteren Werkstücks zunächst noch innerhalb einer Projektion des Überdeckungsbereichs der einander überdeckenden Durchtrittsöffnungen in eine senkrecht zu der Durchtrittsachse verlaufende Ebene. Aus dieser Ausgangsstellung wird der Gegenhalter in eine Funktionsstellung geschwenkt. Bei der Schwenkbewegung des Gegenhalters wirkt dieser mit dem Rand der Durchtrittsöffnung an dem ihm zugeordneten Werkstück der einander überlappenden Werkstücke derart zusammen, dass die einerseits von dem Widerlager und andererseits von dem Gegenhalter längs der Durchtrittsachse beaufschlagten einander überlappenden Werkstücke aneinander angelegt werden. Zu diesem Zweck ist an dem Gegenhalter werkstückseitig und/oder an dem Rand der Durchtrittsöffnung des dem Gegenhalter zugeordneten Werkstücks der einander überlappenden Werkstücke gegenhalterseitig eine Anzugsschräge vorgesehen. Die Anzugsschräge kann dabei geradlinig oder auf andere Weise geneigt verlaufen. Die aneinander angelegten einander überlappenden Werkstücke werden miteinander verschweißt. Durch Laserschweißen wird dabei auch eine Verbindung zwischen den einander überlappenden Werkstücken einerseits und dem weiteren Werkstück andererseits hergestellt. Die Vorbereitung des Schweißvorgangs an den einander überlappenden Werkstücken erfolgt mittels des mit den beiden einander überlappenden Werkstücken zu verbindenden weiteren Werkstücks. Die Verbindung zwischen den beiden einander überlappenden Werkstücken einerseits und dem weiteren Werkstück andererseits wird ebenfalls durch Laserschweißen hergestellt, wobei die Herstellung der Schweißverbindung zwischen den beiden einander überlappenden Werkstücken die Herstellung der Schweißverbindung zwischen dem weiteren Werkstück einerseits und den beiden einander überlappenden Werkstücken andererseits bedingt. Gleichzeitig werden die einander überlappenden Werkstücke untereinander und die einander überlappenden Werkstücke mit dem weiteren Werkstück verbunden.

Im Rahmen des Herstellungsverfahrens nach Patentanspruch 8 ist als weiteres Werkstück ein Versteifungsblech vorgesehen, das zur Herstellung eines Trägers zur Führung einer Bewegungseinheit einer Werkzeugmaschine an Deckbleche eines äußeren Träger-Hohlprofils angebunden wird.

Besondere Varianten des Fertigungsverfahrens gemäß dem unabhängigen Patentanspruch 1 ergeben sich aus den abhängigen Patentansprüchen 2 bis 7.

Gemäß Patentanspruch 2 wird das weitere Werkstück erfindungsgemäß auch dazu genutzt, die miteinander zu verbindenden einander überlappenden Werkstücke in einer senkrecht zu der Durchtrittsachse verlaufenden Richtung relativ zueinander zu justieren. Auf einfache Art und Weise kann eine derartige Justage dadurch bewerkstelligt werden, dass in die einander überlappenden Werkstücke deckungsgleiche Durchtrittsöffnungen eingebracht werden und das weitere Werkstück in demjenigen Bereich, der bei Gebrauchslage des weiteren Werkstücks innerhalb der sich überdeckenden Durchtrittsöffnungen angeordnet ist, mit einem komplementären Querschnitt versehen wird.

Grundsätzlich ist es denkbar, dass der Gegenhalter des weiteren Werkstücks maschinell aus der Ausgangsstellung in die Funktionsstellung geschwenkt wird. Erfindungsgemäß bevorzugt wird ausweislich Patentanspruch 3 eine manuelle Überführung des Gegenhalters des weiteren Werkstücks in die Funktionsstellung.

Patentanspruch 4 beschreibt eine bevorzugte Bauart der im Rahmen des erfindungsgemäßen Fertigungsverfahrens verwendeten Verbindungshilfe. Gemäß Patentanspruch 4 handelt es sich bei dem als Verbindungshilfe vorgesehenen weiteren Werkstück um ein Blechteil mit einem Widerlagerteil, einem Durchtrittsteil und einem Gegenhalterteil. Durch einfache Bearbeitungsmaßnahmen lässt sich aus einem Blechrohling die Verbindungshilfe mit ihren zweckentsprechend zu gestaltenden Teilen herstellen.

Ausweislich Patentanspruch 5 wird der Gegenhalter des weiteren Werkstücks und/oder das Widerlager des weiteren Werkstücks vorzugsweise zeitlich parallel mit der Herstellung der Schweißverbindung zwischen den einander überlappenden Werkstücken entfernt. Durch die zeitliche Parallelisierung der beiden Verfahrensschritte lässt sich die Gesamtdauer des Fertigungsverfahrens erheblich verkürzen.

Zweckmäßigerweise übernimmt gemäß Patentanspruch 6 die zur Herstellung der Schweißverbindung verwendete Vorrichtung auch die Entfernung des Gegenhalters bzw. des Widerlagers des weiteren Werkstücks.

Wird an einem der beiden einander überlappenden Bleche die Verbindungszone gegenüber dem restlichen Blech um die Dicke des anderen der beiden einander überlappenden Bleche abgekröpft, so ergibt sich nach dem Herstellen der Schweißverbindung ein versatzfreier Übergang zwischen den einander überlappenden Blechen (Patentanspruch 7).

Nachfolgend wird die Erfindung anhand beispielhafter schematischer Darstellungen näher erläutert. Es zeigen:
- Figur 1: zwei Bleche und eine Verbindungshilfe, die im Rahmen eines Fertigungsverfahrens durch Laserschweißen miteinander zu verbinden sind,
- Figuren 2 bis 4: die beiden Bleche und die Verbindungshilfe gemäß Figur 1 in unterschiedlichen Phasen des Fertigungsverfahrens und
- Figur 5: einen unter Anwendung des Fertigungsverfahrens gemäß den Figuren 1 bis 4 hergestellten Träger zur Führung einer Bewegungseinheit einer Werkzeugmaschine.

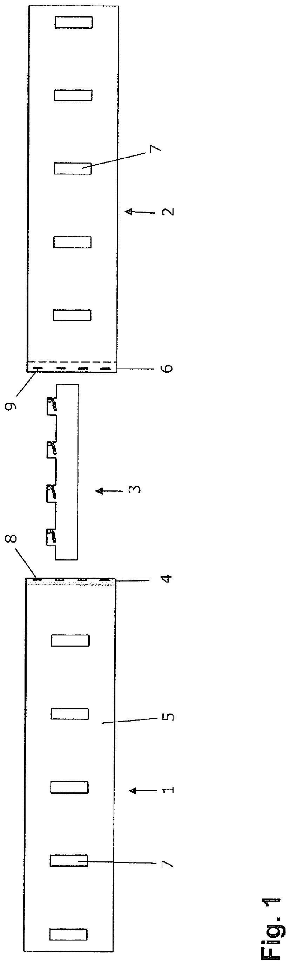

Gemäß Figur 1 handelt es sich bei durch Laserschweißen miteinander zu verbindenden Werkstücken um zwei Bleche in Form eines ersten Blechzuschnitts 1 und eines zweiten Blechzuschnitts 2 sowie um ein weiteres Werkstück in Form einer Verbindungshilfe 3. An dem ersten Blechzuschnitt 1 ist eine Verbindungszone 4 gegenüber einem restlichen Blech 5 um die Dicke des zweiten Blechzuschnitts 2 abgekröpft. Eine Verbindungszone 6 an dem zweiten Blechzuschnitt 2 ist mit einer gestrichelten Begrenzungslinie dargestellt.

Beide Blechzuschnitte 1, 2 sind mit Ausschnitten 7 versehen. Die Breite der Verbindungszonen 4, 6 ist derart bemessen, dass an den miteinander verschweißten Blechzuschnitten 1, 2 die Ausschnitte 7 an dem ersten Blechzuschnitt 1 von den Ausschnitten 7 an dem zweiten Blechzuschnitt 2 mit einem Sollmaß beabstandet sind.

Die Verbindungszone 4 des ersten Blechzuschnitts 1 weist rechteckige Durchtrittsöffnungen 8 auf, die Verbindungszone 6 des zweiten Blechzuschnitts 2 ist mit rechteckigen Durchtrittsöffnungen 9 versehen. Die Durchtrittsöffnungen 8, 9 besitzen identische Abmessungen und sind in den Verbindungszonen 4, 6 des ersten Blechzuschnitts 1 und des zweiten Blechzuschnitts 2 derart positioniert, dass bei miteinander fluchtenden und einander an den Verbindungszonen 4, 6 überlappenden Blechzuschnitten 1, 2 jeweils eine der Durchtrittsöffnungen 8 an dem ersten Blechzuschnitt 1 von einer Durchtrittsöffnung 9 an dem zweiten Blechzuschnitt 2 vollständig überdeckt wird.

Die Verbindungshilfe 3 wurde als Blechteil durch schneidende Bearbeitung mittels Laser aus einem Blechrohling gefertigt. Die Verbindungshilfe 3 weist einen bei Gebrauchslage der Verbindungshilfe 3 als Widerlager dienenden Widerlagerteil 10, vier Durchtrittsteile 11 sowie vier Gegenhalterteile 12 auf, von denen bei Gebrauchszustand der Verbindungshilfe 3 jeder einen Gegenhalter bildet.

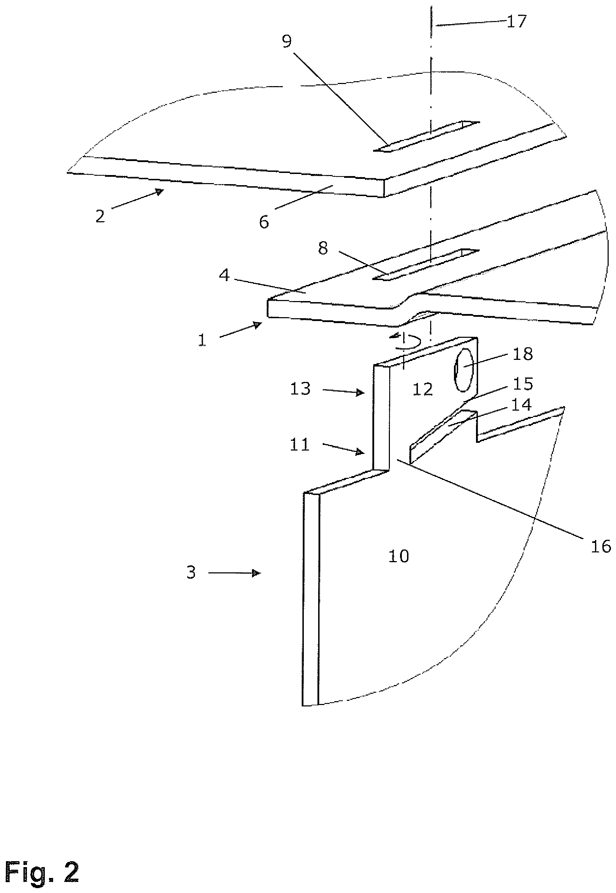

Im Detail sind der Widerlagerteil 10 sowie jeweils ein Durchtrittsteil 11 und ein Gegenhalterteil 12 der Verbindungshilfe 3 in Figur 2 zu erkennen.

Der Durchtrittsteil 11 und der Gegenhalterteil 12 werden demnach von einem rechteckigen Vorsprung 13 des Widerlagerteils 10 gebildet, wobei der rechteckige Vorsprung 13 mit einem Schrägschlitz 14 versehen ist. Aufgrund des Schrägschlitzes 14 ergibt sich an der Unterseite des Gegenhalterteils 12 eine Anzugsschräge 15. Über ein bei der Erstellung des Schrägschlitzes 14 stehen gebliebenes Verbindungsstück 16 des Durchtrittsteils 11 ist der Gegenhalterteil 12 der Verbindungshilfe 3 an den Widerlagerteil 10 angebunden. Im Ausgangszustand gemäß Figur 2 liegen der Widerlagerteil 10, der Durchtrittsteil 11 und der Gegenhalterteil 12 der Verbindungshilfe 3 in einer gemeinsamen Ebene. Entsprechend stellen sich die Verhältnisse an den Durchtrittsteilen 11 und den Gegenhalterteilen 12 der Verbindungshilfe 3 dar, die in Figur 2 nicht gezeigt sind.

Zur Herstellung einer den ersten Blechzuschnitt 1 und den zweiten Blechzuschnitt 2 umfassenden Schweißkonstruktion werden zunächst die miteinander zu verbindenden Werkstücke in der in Figur 2 dargestellten Weise gegeneinander ausgerichtet. Der erste Blechzuschnitt 1 und der zweite Blechzuschnitt 2 überlappen einander an den Verbindungszonen 4, 6 wobei Kontaktseiten der Verbindungszonen 4, 6 einander zugewandt sind. Der erste Blechzuschnitt 1 und der zweite Blechzuschnitt 2 sind relativ zueinander derart positioniert, dass die beiderseitigen Durchtrittsöffnungen 8, 9 deckungsgleich übereinander liegen. Die Verbindungshilfe 3 ist gegenüber den Blechzuschnitten 1, 2 derart ausgerichtet, dass jeder der rechteckigen Vorsprünge 13 der Verbindungshilfe 3 einem Paar von Durchtrittsöffnungen 8, 9 an den Blechzuschnitten 1, 2 gegenüberliegt.

Ausgehend von diesen Verhältnissen wird die Verbindungshilfe 3 längs einer Durchtrittsachse 17 in die Durchtrittsöffnungen 8, 9 der beiden einander überlappenden Blechzuschnitte 1, 2 eingeführt, bis der Widerlagerteil 10, welcher sämtliche Durchtrittsöffnungen 8 des ersten Blechzuschnitts 1 in radialer Richtung der Durchtrittsachse 17 überragt, auf die von der Kontaktseite der Verbindungszone 4 abliegende Unterseite des ersten Blechzuschnitts 1 aufläuft. Der Durchtrittsteil 11 der Verbindungshilfe 3 wird nun von den längs der Durchtrittsachse 17 miteinander fluchtenden Durchtrittsöffnungen 8, 9 der Blechzuschnitte 1, 2 aufgenommen. Da der Querschnitt des rechteckigen Vorsprungs 13 an der Verbindungshilfe 3 den deckungsgleichen Querschnitten der zugeordneten Durchtrittsöffnungen 8, 9 an den Blechzuschnitten 1, 2 entspricht, sorgt der Durchtrittsteil 11 der Verbindungshilfe 3 für eine senkrecht zu der Durchtrittsachse 17 spielfreie gegenseitige Justage des ersten Blechzuschnitts 1, des zweiten Blechzuschnitts 2 und der Verbindungshilfe 3.

Mit dem nach wie vor in derselben Ebene wie der Durchtrittsteil 11 und der Widerlagerteil 10 angeordneten Gegenhalterteil 12 steht die Verbindungshilfe 3 längs der Durchtrittsachse 17 an der von der Kontaktseite der Verbindungszone 6 abliegenden Seite gegenüber dem zweiten Blechzuschnitt 2 vor. Die Anzugsschräge 15 an dem Gegenhalterteil 12 liegt in Richtung der Durchtrittsachse 17 gesehen mit einer an dem Verbindungsstück 16 ansetzenden Teillänge unterhalb des an der Oberseite des zweiten Blechzuschnitts 2 gelegenen Randes der Durchtrittsöffnung 9.

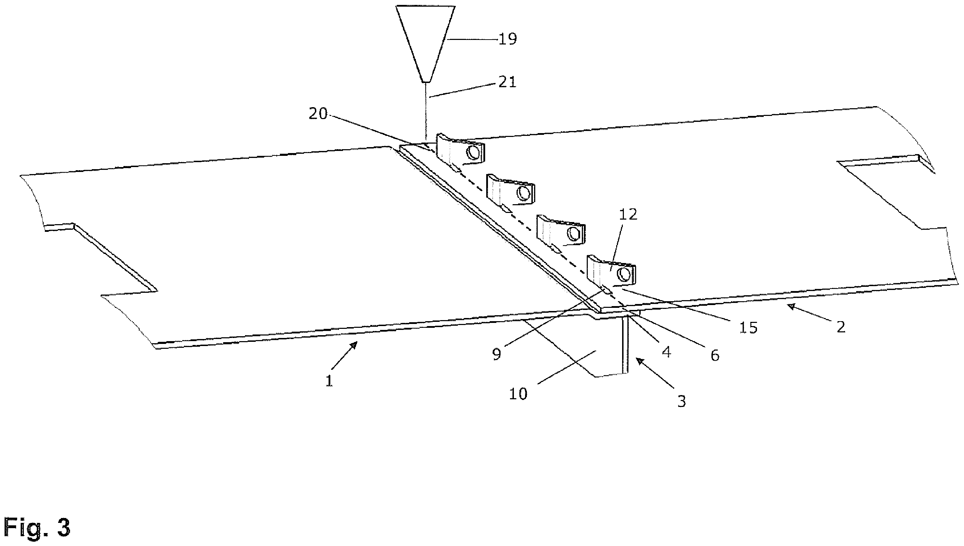

Nun wird mittels eines in eine Eingriffsöffnung 18 an dem Gegenhalterteil 12 eingesteckten Hebels der Gegenhalterteil 12 der Verbindungshilfe 3 um eine in Figur 2 angedeutete und parallel zu der Durchtrittsachse 17 verlaufende Schwenkachse aus der Ebene des Widerlagerteils 10 und des Durchtrittsteils 11 geschwenkt. Dadurch gelangt der Gegenhalterteil 12 aus der Ausgangsstellung gemäß Figur 2 in eine Funktionsstellung, die für sämtliche Gegenhalterteile 12 der Verbindungshilfe 3 in Figur 3 dargestellt ist. Das Verbindungsstück 16 des Durchtrittsteils 11 lässt die manuelle Schwenkbewegung des Gegenhalterteils 12 zu. Alternativ ist auch eine maschinelle Überführung der Gegenhalterteile 12 der Verbindungshilfe 3 aus der Ausgangsstellung in die Funktionsstellung denkbar.

Im Laufe der Schwenkbewegung des Gegenhalterteils 12 gleitet die werkstückseitige Anzugsschräge 15 des Gegenhalterteils 12 über die in Bewegungsrichtung des Gegenhalterteils 12 gelegene längere Kante an dem Längsrand der betreffenden Durchtrittsöffnung 9 des zweiten Blechzuschnitts 2. Dabei wirken die Anzugsschräge 15 an dem Gegenhalterteil 12 und der Rand der Durchtrittsöffnung 9 derart miteinander zusammen, dass das aus dem ersten Blechzuschnitt 1 und dem zweiten Blechzuschnitt 2 bestehende Blechpaket zwischen dem Widerlagerteil 10 der Verbindungshilfe 3 einerseits und dem Gegenhalterteil 12 der Verbindungshilfe 3 andererseits verspannt wird. Infolgedessen liegen der erste Blechzuschnitt 1 und der zweite Blechzuschnitt 2 unmittelbar und somit spaltfrei aneinander an.

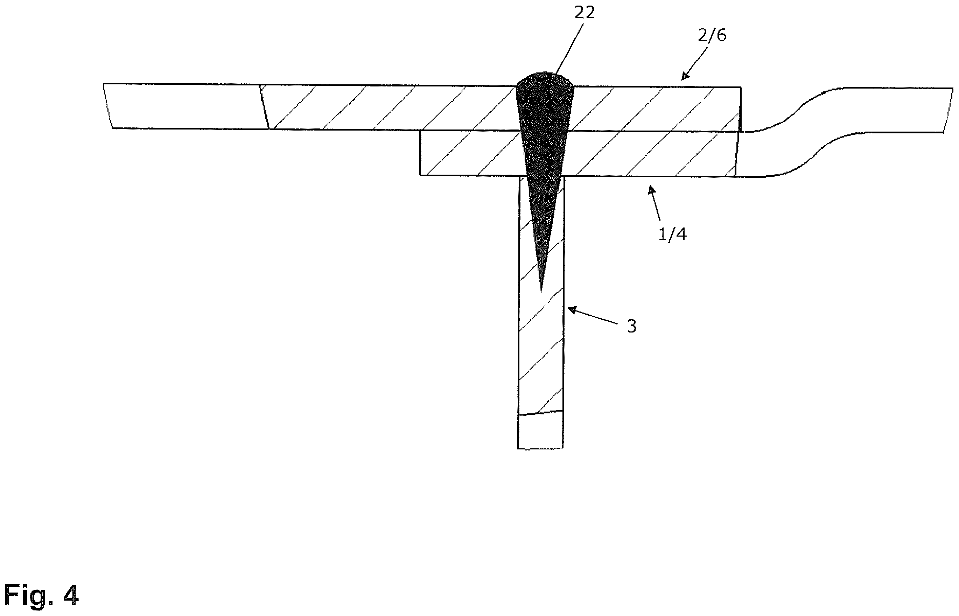

Ein in Figur 3 stark schematisch dargestellter Laser-Schweißkopf 19 wird nun längs einer in Figur 3 gestrichelt angedeuteten Schweißlinie 20 an der aus dem ersten Blechzuschnitt 1, dem zweiten Blechzuschnitt 2 und der Verbindungshilfe 3 bestehenden Anordnung entlang bewegt. Ein von dem Laser-Schweißkopf 19 ausgehender Laserstrahl 21 stellt dabei in den Werkstückbereichen außerhalb der Durchtrittsöffnungen 9 eine Schweißverbindung zwischen dem oben liegenden zweiten Blechzuschnitt 2 und dem darunter liegenden ersten Blechzuschnitt 1 her. In dem dargestellten Beispielsfall werden außerdem auch der erste Blechzuschnitt 1 und der Widerlagerteil 10 der Verbindungshilfe 3 miteinander verschweißt. Eine dabei erstellte und sich über die Blechzuschnitte 1, 2 und den Widerlagerteil 10 der Verbindungshilfe 3 erstreckende Schweißnaht 22 ist in Figur 4 zu erkennen. Bei der Bewegung des Laser-Schweißkopfs 19 längs der Schweißlinie 20 werden die insgesamt vier Gegenhalterteile 12, die an der Oberseite des zweiten Blechzuschnitts 2 vorstehen, mittels des Laserstrahls 21 durch Brennschneiden von der restlichen Verbindungshilfe 3 abgetrennt.

Abweichend von den in den Figuren 1 bis 4 dargestellten Verhältnissen kann als Verbindungshilfe auch ein Versteifungsblech vorgesehen werden, das gemeinsam mit Deckblechen eines äußeren Träger-Hohlprofils einen Träger zur Führung einer Bewegungseinheit einer Werkzeugmaschine bildet.

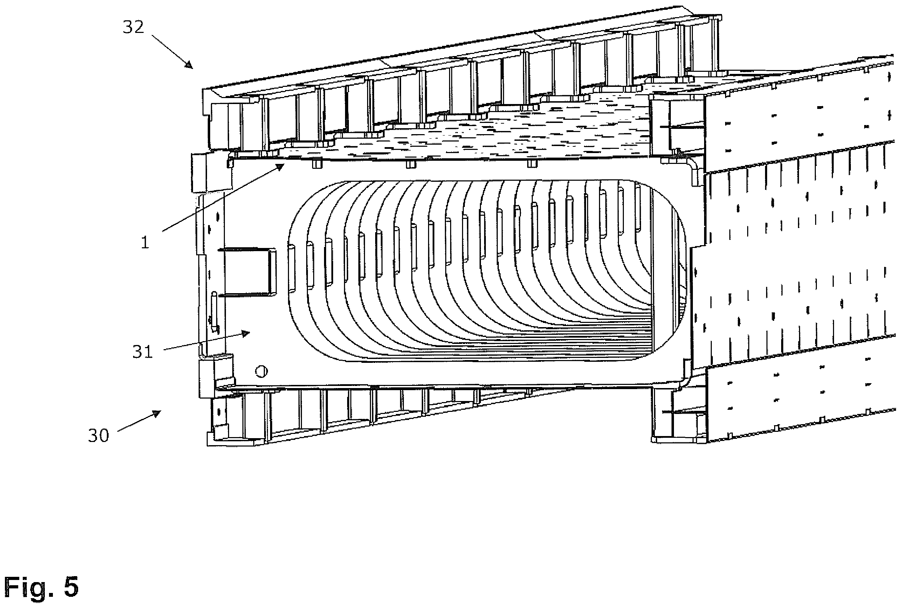

Ein derartiger Träger 30 ist in Figur 5 dargestellt. Außerhalb der Darstellungsebene von Figur 5 ist ein Versteifungsblech 31 in der vorstehend zu den Figuren 1 bis 4 beschriebenen Weise mit einem in Figur 5 gezeigten ersten Blechzuschnitt 1 und einem in Figur 5 nicht erkennbaren zweiten Blechzuschnitt zu einer Schweißkonstruktion verbunden. Die Blechzuschnitte dienen als Deckbleche eines äußeren Träger-Hohlprofils 32.

## Patentansprüche

1. Fertigungsverfahren, im Rahmen dessen zwei Werkstücke (1, 2), vorzugsweise zwei Bleche, an beiderseitigen Verbindungszonen (4, 6) mit gegenseitiger Überlappung angeordnet und im Überlappungsbereich mit einander zugewandten Kontaktseiten der Verbindungszonen (4, 6) aneinander angelegt werden und im Rahmen dessen die aneinander angelegten Werkstücke (1, 2) durch Laserschweißen miteinander verbunden werden,
**dadurch gekennzeichnet,**
**dass** die beiden einander überlappenden Werkstücke (1, 2) mit den beiderseitigen Verbindungszonen (4, 6) aneinander angelegt werden, indem
• an jedem der Werkstücke (1, 2) in der Verbindungszone (4, 6) eine Durchtrittsöffnung (8, 9) derart erstellt wird, dass die Durchtrittsöffnungen (8, 9) der beiden einander überlappenden Werkstücke (1, 2) einander überdecken,
• ein mit den beiden einander überlappenden Werkstücken (1, 2) zu verbindendes weiteres Werkstück, welches eine Verbindungshilfe (3) ausbildet, in die einander überdeckenden Durchtrittsöffnungen (8, 9) längs einer Durchtrittsachse (17) derart eingeführt wird, dass das weitere Werkstück längs der Durchtrittsachse (17) mit jeweils einem Überstand gegenüber den einander überlappenden Werkstücken (1, 2) beidseits vorsteht, wobei das weitere Werkstück mit einem an einem ersten der Überstände des weiteren Werkstücks vorgesehenen Widerlager (10) des weiteren Werkstücks an der von der Kontaktseite abliegenden Seite des dem ersten Überstand zugeordneten Werkstücks (1, 2) derart angeordnet wird, dass das Widerlager (10) des weiteren Werkstücks den Rand der Durchtrittsöffnung (8, 9) des dem ersten Überstand zugeordneten Werkstücks (1, 2) der einander überlappenden Werkstücke (1, 2) in radialer Richtung der Durchtrittsachse (17) übergreift,
• ein Gegenhalter (12) des weiteren Werkstücks an dem zweiten der Überstände des weiteren Werkstücks mit einer Schwenkbewegung um eine parallel zu der Durchtrittsachse (17) verlaufende Schwenkachse aus einer Ausgangsstellung in eine Funktionsstellung geschwenkt wird, wobei der Gegenhalter (12) in der Ausgangsstellung innerhalb einer Projektion des Überdeckungsbereiches der einander überdeckenden Durchtrittsöffnungen (8, 9) der einander überlappenden Werkstücke (1, 2) in eine senkrecht zu der Durchtrittsachse (17) verlaufende Ebene liegt und in der Funktionsstellung den Rand der Durchtrittsöffnung (8, 9) des dem zweiten Überstand zugeordneten Werkstücks (1, 2) der einander überlappenden Werkstücke (1, 2) an der von der Kontaktseite abliegenden Seite des dem zweiten Überstand zugeordneten Werkstücks (1, 2) der einander überlappenden Werkstücke (1, 2) in radialer Richtung der Durchtrittsachse (17) übergreift, wobei an dem Gegenhalter (12) werkstückseitig und/oder an dem Rand der Durchtrittsöffnung (8, 9) des dem zweiten Überstand zugeordneten Werkstücks (1, 2) der einander überlappenden Werkstücke (1, 2) gegenhalterseitig eine Anzugsschräge (15) vorgesehen ist und wobei der Gegenhalter (12) und der Rand der Durchtrittsöffnung (8, 9) des dem zweiten Überstand zugeordneten Werkstücks (1, 2) der einander überlappenden Werkstücke (1, 2) bei der Schwenkbewegung des Gegenhalters (12) in die Funktionsstellung aufgrund der Anzugsschräge(n) (15) derart miteinander zusammenwirken, dass die einerseits von dem Widerlager (10) und andererseits von dem Gegenhalter (12) längs der Durchtrittsachse (17) beaufschlagten einander überlappenden Werkstücke (1, 2) aneinander angelegt werden und
**dass** das weitere Werkstück einerseits und die beiden einander überlappenden Werkstücke (1, 2) andererseits nach dem Schwenken des an dem weiteren Werkstück vorgesehenen Gegenhalters (12) in die Funktionsstellung durch Laserschweißen miteinander verbunden werden, indem die beiden einander überlappenden Werkstücke (1, 2) durch Laserschweißen miteinander verbunden werden.

2. Fertigungsverfahren nach Anspruch 1, **dadurch gekennzeichnet, dass** die einander überlappenden Werkstücke (1, 2) mittels des weiteren Werkstücks in einer zu der Durchtrittsache (17) senkrechten Richtung relativ zueinander justiert werden.

3. Fertigungsverfahren nach einem der vorhergehenden Ansprüche **dadurch gekennzeichnet, dass** der Gegenhalter (12) des weiteren Werkstücks manuell aus der Ausgangsstellung in die Funktionsstellung geschwenkt wird.

4. Fertigungsverfahren nach einem der vorhergehenden Ansprüche, **dadurch gekennzeichnet, dass** das weitere Werkstück als Blechteil ausgebildet ist, mit einem das Widerlager (10) des weiteren Werkstücks ausbildenden Widerlagerteil, mit einem bei Gebrauchslage des weiteren Werkstücks von den Durchtrittsöffnungen (8, 9) der einander überlappenden Werkstücke (1, 2) aufgenommenen Durchtrittsteil (11) sowie mit einem Gegenhalterteil, welcher den Gegenhalter (12) ausbildet und relativ zu dem Durchtrittsteil (11) um eine Achse schwenkbeweglich ist, die bei Gebrauchslage des weiteren Werkstücks parallel zu der Durchtrittsachse (17) verläuft.

5. Fertigungsverfahren nach einem der vorhergehenden Ansprüche, **dadurch gekennzeichnet, dass** der Gegenhalter (12) des weiteren Werkstücks und/oder das Widerlager (10) des weiteren Werkstücks entfernt wird oder werden, während die aneinander angelegten einander überlappenden Werkstücke (1, 2) durch Laserschweißen miteinander verbunden werden.

6. Fertigungsverfahren nach Anspruch 5, **dadurch gekennzeichnet, dass** das Widerlager (10) des weiteren Werkstücks und/oder der Gegenhalter (12) des weiteren Werkstücks mittels der Vorrichtung entfernt wird oder werden, mittels derer die aneinander angelegten einander überlappenden Werkstücke (1, 2) durch Laserschweißen miteinander verbunden werden.

7. Fertigungsverfahren nach einem der vorhergehenden Ansprüche, im Rahmen dessen zwei Bleche aneinander angelegt und miteinander verbunden werden, **dadurch gekennzeichnet, dass** an einem der beiden Bleche die Verbindungszone (4, 6) gegenüber dem restlichen Blech um die Dicke des anderen Blechs abgekröpft wird, ehe die beiden Bleche mit gegenseitiger Überlappung angeordnet werden.

8. Verfahren zur Herstellung eines Trägers (30) zur Führung einer Bewegungseinheit einer Werkzeugmaschine, wobei der Träger (30) als Schweißkonstruktion mit einem aus Blechen gefertigten äußeren Träger-Hohlprofil (32) hergestellt wird, **dadurch gekennzeichnet, dass** das äußere Träger-Hohlprofil (32) unter Anwendung des Fertigungsverfahrens nach einem der vorhergehenden Ansprüche gefertigt wird, wobei als einander überlappende Werkstücke die Bleche des äußeren Träger-Hohlprofils (32) vorgesehen sind und wobei als weiteres Werkstück ein Versteifungsblech (31) vorgesehen ist, das an der Innenseite der Bleche des äußeren Träger-Hohlprofils (32) angeordnet und mit den Blechen des äußeren Träger-Hohlprofils (32) durch Laserschweißen verbunden wird.

## Claims

1. Manufacturing method, in which two workpieces (1, 2), preferably two metal sheets, are arranged on connecting zones (4, 6) on either side so as to overlap one another and are brought into mutual contact in the overlapping region by contact sides of the connecting zones (4, 6) that face one another, and in which the workpieces (1, 2) brought into mutual contact are interconnected by means of laser welding, **characterised in that** the two overlapping workpieces (1, 2) are brought into mutual contact by the connecting zones (4, 6) on either side **in that**
• a through-opening (8, 9) is made in each of the workpieces (1, 2) in the connecting zone (4, 6) such that the through-openings (8, 9) of the two overlapping workpieces (1, 2) superpose one another,
• an additional workpiece, which is to be connected to the two overlapping workpieces (1, 2) and forms a connection aid (3), is inserted into the superposing through-openings (8, 9) along a through-axis (17) such that the additional workpiece protrudes along the through-axis (17) by a protrusion in relation to the overlapping workpieces (1, 2) on either side, wherein an abutment (10) of the additional workpiece, which abutment is provided on a first protrusion of the additional workpiece, is arranged on the side of the first workpiece (1, 2) assigned to the first protrusion, which side faces away from the contact side, such that the abutment (10) of the additional workpiece engages over the edge of the through-opening (8, 9) of the workpiece (1, 2) of the overlapping workpieces (1, 2) that is assigned to the first protrusion in a radial direction of the through-axis (17),
• a counterholder (12) of the additional workpiece on the second protrusion of the additional workpiece being pivoted, by a pivot movement, about a pivot axis that extends in parallel with the through-axis (17), from a starting position into a functional position, the counterholder (12) in the starting position being located inside a projection of the region of superposition of the superposing through-openings (8, 9) of the overlapping workpieces (1, 2) in a plane extending perpendicularly to the through-axis (17) and, in the functional position, engaging, in the radial direction of the through-axis (17), over the edge of the through-opening (8, 9) of the workpiece (1, 2), which is assigned to the second protrusion, of the overlapping workpieces (1, 2) on the side, which faces away from the contact side, of the workpiece (1, 2), which is assigned to the second protrusion, of the overlapping workpieces (1, 2), an inclined surface (15) being provided on the counterholder (12) on the workpiece side thereof and/or on the edge of the through-opening (8, 9) of the workpiece (1, 2) on the counterholder side thereof, which workpiece is assigned to the second protrusion, of the overlapping workpieces (1, 2), and the counterholder (12) and the edge of the through-opening (8, 9) of the workpiece (1, 2), which is assigned to the second ptotrusion, of the overlapping workpieces (1, 2), interacting with one another when the counterholder (12) is pivoted into the functional position due to the inclined surface(s) (15) such that the overlapping workpieces (1, 2), on which the abutment (10) acts on one side and on which the counterholder (12) acts on the other side along the through-axis (17), are brought into mutual contact, and
**in that** the additional workpiece on the one hand and the two overlapping workpieces (1, 2) on the other are interconnected by laser welding once the counterholder (12) provided on the additional workpiece has pivoted into the functional position, by the two overlapping workpieces (1, 2) being interconnected by laser welding.

2. Manufacturing method according to claim 1, **characterised in that** the overlapping workpieces (1, 2) are adjusted relative to one another, by means of the additional workpiece, in a direction that is perpendicular to the through-axis (17).

3. Manufacturing method according to any one of the preceding claims, **characterised in that** the counterholder (12) of the additional workpiece is manually pivoted out of the starting position and into the functional position.

4. Manufacturing method according to any one of the preceding claims, **characterised in that** the additional workpiece is a sheet metal part, comprising an abutment part which forms the abutment (10) of the additional workpiece, comprising a through-part (11) which is received by the through-openings (8, 9) in the overlapping workpieces (1, 2) when the additional workpiece is in the use position, and comprising a counterholder part, which forms the counterholder (12) and can be pivoted relative to the through-part (11) about an axis which extends in parallel with the through-axis (17) when the additional workpiece is in the use position.

5. Manufacturing method according to any one of the preceding claims, **characterised in that** the counterholder (12) of the additional workpiece and/or the abutment (10) of the additional workpiece is/are removed, while the overlapping workpieces (1, 2), which are brought into mutual contact, are interconnected by laser welding.

6. Manufacturing method according to claim 5, **characterised in that** the abutment (10) of the additional workpiece and/or the counterholder (12) of the additional workpiece is/are removed by the device which is used to interconnect the overlapping workpieces (1, 2), which are brought into mutual contact, by laser welding.

7. Manufacturing method according to any one of the preceding claims, in which two metal sheets are brought into mutual contact and interconnected, **characterised in that** the connecting zone (4, 6) of one of the two metal sheets is offset relative to the rest of the metal sheet by the thickness of the other sheet, before the two sheets are arranged so as to overlap one another.

8. Method for producing a support (30) for guiding a mobile unit of a machine tool, the support (30) being produced as a welded construction having an outer hollow support profile (32) manufactured from metal sheets, **characterised in that** the outer hollow support profile (32) is manufactured using the manufacturing method according to any one of the preceding claims, the metal sheets of the outer hollow support profile (32) being provided as overlapping workpieces, and a metal reinforcing sheet (31) being provided as the additional workpiece, which is arranged on the inner side of the metal sheets of the outer hollow support profile (32) and is connected to the metal sheets of the outer hollow support profile (32) by means of laser welding.

## Revendications

1. Procédé de fabrication, dans le cadre duquel deux pièces (1, 2), de préférence deux tôles, sont disposées en chevauchement mutuel par des zones d'assemblage (4, 6) et sont appliquées l'une contre l'autre dans la zone de chevauchement par des faces de contact en vis-à-vis des zones d'assemblage (4, 6), et dans le cadre duquel les pièces (1, 2) appliquées l'une contre l'autre sont mutuellement assemblées par soudage au laser,
**caractérisé en ce que** les deux pièces (1, 2) en chevauchement mutuel sont appliquées l'une contre l'autre par les zones d'assemblage (4, 6) par le fait que
- une ouverture de passage (8, 9) est réalisée sur chacune des pièces (1, 2) dans la zone d'assemblage (4, 6) de telle sorte que les ouvertures de passage (8, 9) des deux pièces (1, 2) en chevauchement mutuel sont en recouvrement mutuel,
- une pièce supplémentaire à assembler aux deux pièces (1, 2) en chevauchement mutuel, qui constitue une aide à l'assemblage (3), est introduite dans les ouvertures de passage (8, 9) en recouvrement mutuel, le long d'un axe de passage (17), de telle sorte que la pièce supplémentaire dépasse de part et d'autre par rapport aux deux pièces (1, 2) en chevauchement mutuel par un porte à faux respectif le long de l'axe de passage (17), sachant que la pièce supplémentaire est, par un contre-appui (10) de la pièce supplémentaire prévu sur un premier des porte à faux de la pièce supplémentaire, disposée, sur le côté de la pièce (1, 2) associée au premier porte à faux qui est opposée à la face de contact, de telle sorte que le contre-appui (10) de la pièce supplémentaire engage en recouvrement dans la direction radiale de l'axe de passage (17) le bord de l'ouverture de passage (8, 9) de celle (1, 2) des pièces (1, 2) en chevauchement mutuel qui est associée au premier porte à faux,
- un contre-support (12) de la pièce supplémentaire, sur le deuxième des porte à faux de la pièce supplémentaire, est pivoté d'une position initiale dans une position fonctionnelle par un mouvement de pivotement autour d'un axe de pivotement s'étendant parallèlement à l'axe de passage (17), sachant que le contre-support (12), dans la position initiale, se situe, dans un plan s'étendant perpendiculairement à l'axe de passage (17), à l'intérieur d'une projection de la région de recouvrement des ouvertures de passage (8, 9) en recouvrement mutuel des pièces (1, 2) en chevauchement mutuel, et, dans la position fonctionnelle, engage en recouvrement dans la direction radiale de l'axe de passage (17), sur le côté - opposée à la face de contact - de celle (1, 2) des pièces (1, 2) en chevauchement mutuel qui est associée au deuxième porte à faux, le bord de l'ouverture de passage (8, 9) de celle (1, 2) des pièces (1, 2) en chevauchement mutuel qui est associée au deuxième porte à faux, sachant qu'un biais de serrage (15) est prévu côté pièce sur le contre-support (12), et/ou côté contre-support sur le bord de l'ouverture de passage (8, 9) de celle (1, 2) des pièces (1, 2) en chevauchement mutuel qui est associée au deuxième porte à faux, et sachant que le contre-support (12) et le bord de l'ouverture de passage (8, 9) de celle (1, 2) des pièces (1, 2) en chevauchement mutuel qui est associée au deuxième porte à faux, lors du mouvement de pivotement du contre-support (12) dans la position fonctionnelle, en raison du ou des biais de serrage (15), coopèrent mutuellement de telle sorte que les pièces (1, 2) en chevauchement mutuel, sollicitées le long de l'axe de passage (17) d'un côté par le contre-appui (10) et de l'autre côté par le contre-support (12), sont appliquées l'une contre l'autre,
et **en ce que** la pièce supplémentaire d'une part et les deux pièces (1, 2) en chevauchement mutuel d'autre part sont, à la suite du pivotement dans la position fonctionnelle du contre-support (12) prévu sur la pièce supplémentaire, mutuellement assemblées par soudage au laser par le fait que les deux pièces (1, 2) en chevauchement mutuel sont mutuellement assemblées par soudage au laser.

2. Procédé de fabrication selon la revendication 1, **caractérisé en ce que** les pièces (1, 2) en chevauchement mutuel sont, au moyen de la pièce supplémentaire, ajustées l'une par rapport à l'autre dans une direction perpendiculaire à l'axe de passage (17).

3. Procédé de fabrication selon l'une des revendications précédentes, **caractérisé en ce que** le contre-support (12) de la pièce supplémentaire est pivoté manuellement de la position initiale dans la position fonctionnelle.

4. Procédé de fabrication selon l'une des revendications précédentes, **caractérisé en ce que** la pièce supplémentaire est réalisée sous la forme d'une pièce de tôle, avec une partie de contre-appui formant le contre-appui (10) de la pièce supplémentaire, avec une partie de passage (11) qui, dans la position d'utilisation de la pièce supplémentaire, est reçue par les ouvertures de passage (8, 9) des pièces (1, 2) en chevauchement mutuel, et avec une partie de contre-support, qui forme le contre-support (12) et qui est, par rapport à la partie de passage (11), mobile en pivotement autour d'un axe qui s'étend, en position d'utilisation de la pièce supplémentaire, parallèlement à l'axe de passage (17).

5. Procédé de fabrication selon l'une des revendications précédentes, **caractérisé en ce que** le contre-support (12) de la pièce supplémentaire et/ou le contre-appui (10) de la pièce supplémentaire est ou sont éliminés tandis que les pièces en chevauchement mutuel (1, 2) appliquées l'une contre l'autre sont mutuellement assemblées par soudage au laser.

6. Procédé de fabrication selon la revendication 5, **caractérisé en ce que** le contre-support (12) de la pièce supplémentaire et/ou le contre-appui (10) de la pièce supplémentaire est ou sont éliminés au moyen du dispositif au moyen duquel les pièces en chevauchement mutuel (1, 2) appliquées l'une contre l'autre sont mutuellement assemblées par soudage au laser.

7. Procédé de fabrication selon l'une des revendications précédentes, dans le cadre duquel deux tôles sont appliquées l'une contre l'autre et mutuellement assemblées, **caractérisé en ce que**, sur une des deux tôles, la zone d'assemblage (4, 6) est contrecoudée par rapport à la tôle restante de l'épaisseur de l'autre tôle avant que les deux tôles soient disposées en chevauchement mutuel.

8. Procédé de production d'un support (30) pour le guidage d'une unité mobile d'une machine-outil, sachant que le support (30) est réalisé sous la forme d'une construction soudée avec un profilé creux extérieur (32) de support constitué de tôles, **caractérisé en ce que** le profilé creux extérieur (32) de support est fabriqué en utilisant le procédé de fabrication selon l'une des revendications précédentes, sachant que les tôles du profilé creux extérieur (32) de support sont prévues comme pièces en chevauchement mutuel et sachant qu'une tôle de renforcement (31) est prévue comme pièce supplémentaire, qui est disposée sur la face intérieure des tôles du profilé creux extérieur (32) de support et qui est assemblée aux tôles du profilé creux extérieur (32) de support par soudage au laser.
